# EUROPEAN PATENT APPLICATION

(11) **EP 1 256 511 A1**
(43) Date of publication of application: **13.11.2002**
(21) Application number: 02010105.1
(22) Date of filing: 07.05.2002
(51) Int. Cl.: B62D 23/00, B62D 21/08, B62D 27/02

(54) **Support frame for a motor vehicle, and motor vehicle provided with such a support frame**

(30) Priority: 08.05.2001 IT TO20010435
(71) Applicant: FIAT AUTO S.p.A., 10135 Torino (IT)
(72) Inventor: Rima, Sergio, 10060 Frossasco (IT); Lamperti, Angelo, 21057 Olgiate Olona (IT)
(74) Representative: Jorio, Paolo

(57) **Abstract**

A support frame (1) for a motor vehicle (2) supports at least part of the outer covering panels (3) of the motor vehicle (2) itself, and is at least partly produced by means of folding; in particular, the frame (1) has a plurality of elements (6) which are obtained by means of folding, a plurality of elements (4) which are obtained by means of pressing, and a plurality of profiled elements (5).

## Description

The present invention relates to a support frame for a motor vehicle.

In addition to motor vehicles which are produced according to the structural type with a unitised body, motor vehicles are known which comprise a cage or metal frame, which supports the covering panels and the components which define the outer profile of the motor vehicle itself, and have structural characteristics such as to withstand the impacts to which the motor vehicle may be subjected.

The frames of the known type comprise a plurality of different elements, such as side members, cross members, panels and connection components, which are shaped by means of use of corresponding dies, and are then rendered integral with one another.

In general, the aforementioned structural types which have a support frame have the advantage of being modular, such that it is possible to use parts of a single frame in order to produce versions which differ from one another, of a single type of vehicle.

Furthermore, the aforementioned frames of the known type are unsatisfactory when the production volumes are extremely low, and/or when the demand to purchase the motor vehicles may be subject to sudden decreases over a period of time.

In fact, in these conditions, the production costs can be excessively high, compared with the number of frames produced, as a result of the extent of the fixed investments which are made in order to produce the said dies. In fact, the number of dies required in order to produce a frame of the aforementioned known type is extremely high, since each element of the frame which has a form or structure which differs from the others, requires a corresponding series of dedicated dies.

The object of the present invention is to provide a support frame for a motor vehicle, which makes it possible to solve the above-described problems simply, and, in particular, makes it possible to limit the specific investments.

According to the present invention, a support frame for a motor vehicle is provided; the support frame being able to support at least part of the outer covering panels of the motor vehicle itself, and being characterised in that it is at least partly produced by means of folding.

The present invention also relates to a motor vehicle.

According to the present invention, a motor vehicle is provided, comprising a plurality of outer covering panels and a support frame for at least part of the said panels; characterised in that the said support frame is at least partly produced by means of folding.

The invention will now be described with reference to the attached drawings, which illustrate a nonlimiting embodiment of it, in which:
figure 1 is a rear perspective view of a preferred embodiment of the support frame produced according to the present invention, for a motor vehicle;
figures 2 to 5 illustrate in perspective, and on an enlarged scale, different solutions of an embodiment of a detail of the frame in figure 1; and
figure 6 illustrates in perspective, and on an enlarged scale, a connection between two elements of the frame in figure 1.

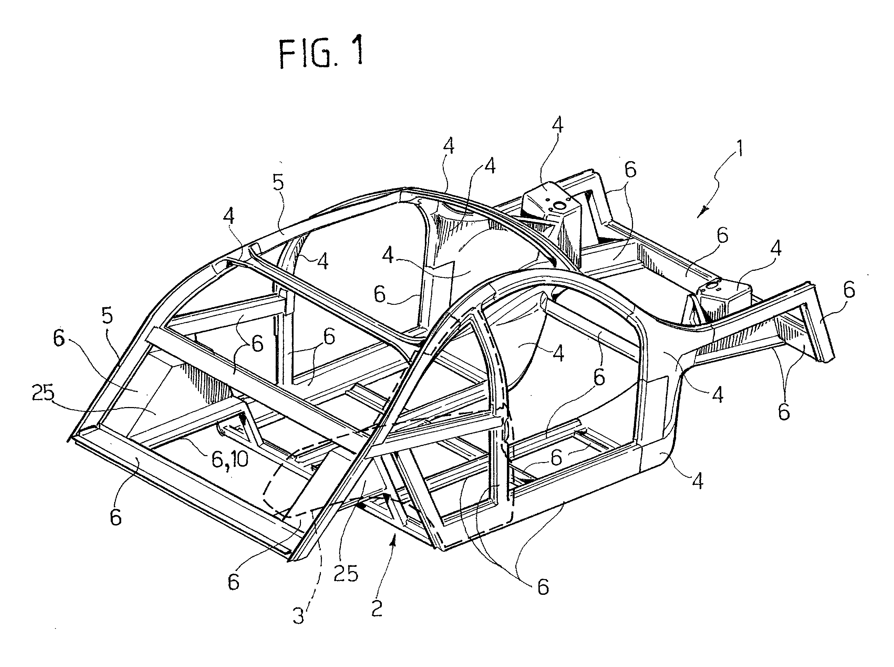

In figure 1, 1 illustrates a support frame for a motor vehicle 2, of which only the parts used for understanding of the present invention are shown.

The motor vehicle 2 comprises bodywork consisting of a plurality of panels 3 (only one of which is shown as a broken line), which cover the frame 1, in order to define the outer profile of the motor vehicle 2 itself, and are integral, in a manner which is known and is not described in detail, with the frame 1 itself.

In particular, the frame 1 is of the type commonly known by the term of space frame, i.e. it forms a three-dimensional cage which supports the panels 3 and other components which are not illustrated, of the motor vehicle 1, and has structural and geometric characteristics such as to withstand the impacts to which the motor vehicle 2 may be subjected.

The frame 1 is preferably made from steel, or alternatively from aluminium or magnesium alloy, and comprises a plurality of different elements (which are designated only partly by the corresponding reference numbers in figure 1), and in particular twenty nine elements 4, which are produced by means of pressing, four profiled elements 5, and sixty elements 6, which are produced by means of folding of rolled metal sections.

The elements 6 are rendered integral with adjacent elements 4, 5, 6, preferably by means of spot welding, and each comprise at least one pair of flat transverse walls 7, which are connected to one another by portions which define corresponding straight folding lines 8.

Part of the elements 6 consists of elongate elements 10, which extend along folding lines 8 which are parallel to one another, and are used, for example, in order to produce the longitudinal members and the straight cross members of the frame 1.

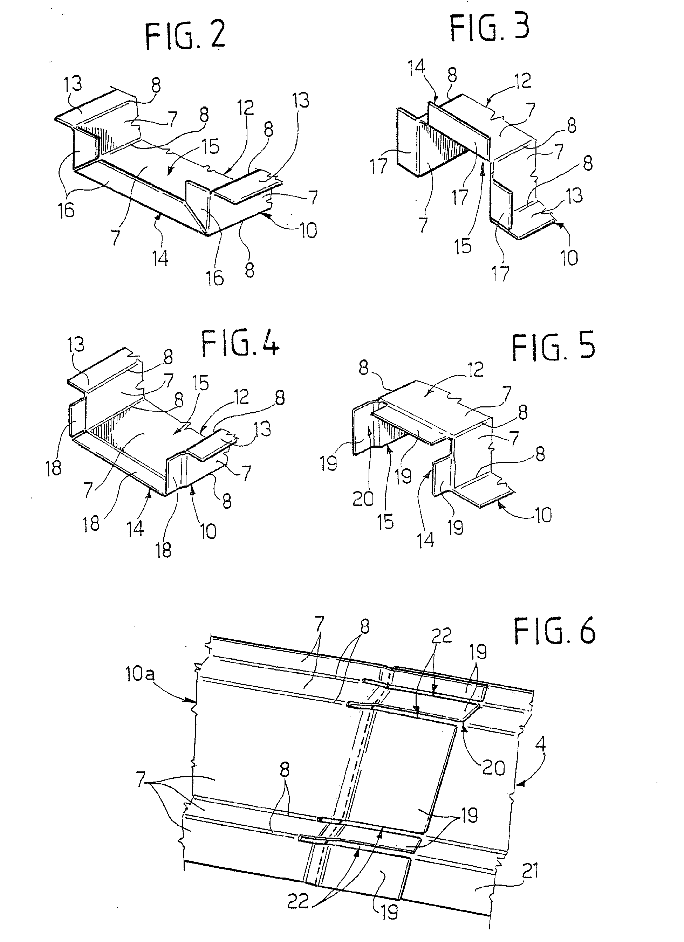

Figures 2 to 5 illustrate four different embodiments of an elongate element 10, which has a transverse cross-section in the shape of an omega, and comprises an intermediate portion 12 in the shape of a "U", which delimits a recess 15, and two opposite end projections 13, which can be supported and welded, in particular, onto the projections 13 of an element 10 facing, in order to produce a box-type structure (not illustrated).

The elongate element 10 ends with an attachment section 14, which is disposed supported and welded onto a portion of an adjacent element 4, 5, 6. With reference to figure 2, the section 14 comprises three tabs 16, each of which extends in a single piece from a corresponding wall 7 of the portion 12, is at right-angles to the wall 7 itself, and faces the interior, in order to enclose the recess 15 partly.

In the embodiment illustrated in figure 3, the section 14 comprises three tabs 17, which differ from the tabs 16 in that they face the exterior, in relation to the recess 15.

In the embodiments in figures 4 and 5, the section 14 comprises three tabs, respectively 18 and 19, which are substantially parallel to the folding lines 8 and to the corresponding walls 7 of the portion 12.

Each tab 19 (figure 5) is spaced from the corresponding wall 7 of the portion 12, in the direction at right-angles to the wall 7 itself, and towards the exterior, such that the tabs 19 define a seat 20, into which the end of an adjacent aligned element 4, 5 or 6 can be inserted. On the other hand, the tabs 18 (figure 4) are spaced towards the interior, in order to be inserted in a corresponding seat or in a corresponding recess 15 defined by an end of an adjacent aligned element 4, 5 or 6. The displacement of each tab 18, 19 from the corresponding wall 7 is approximately the order of magnitude of the thickness of the walls 7 themselves.

Figure 6 shows an elongate element 10a, which has a transverse cross-section which differs from that illustrated in figures 2 to 5, and ends in tabs 19, which are integral with an end portion 21 of an adjacent aligned element 4, which engages the seat 20.

The tabs 19 are separated from one another by slots 22, which are provided along a section of the folding lines 8, such as to remove or "discharge" from the element 10 part of the material which otherwise would cause interference with the edges of the end portion 21. The "discharge" of material is necessary in particular in cases in which elements 4 and 6 are to be connected to one another, since the radii of curvature of the edges obtained by means of folding are smaller than those obtained by means of pressing. It will be appreciated that the "discharge" of material in the possible areas of interference can also be carried out in other areas of the elements 6, and/or in the elements 4 and 5.

With reference to figure 1, in addition to the elongate elements 10, part of the elements 6 consists of panels 25, which are rendered integral with the adjacent elements 4, 5, 6 by means of end attachment tabs. In the particular example illustrated, the panels 25 define the areas which accommodate the wheels (not illustrated) of the motor vehicle 2.

The elements 6 are shaped from rolled metal sections, for example from plates, using automatic or semi-automatic folding machines of a known type, which can be equipped simply and quickly, according to the type and shape of the parts to be produced.

On each occasion, according to the type of part to be produced, selection, positioning and regulation takes place of the tooling of these folding machines, such as slides, grasping units and reference units, and the work cycle is carried out automatically according to a work programme which is stored and implemented by a control unit.

The folding machines of a known type can carry out several operations, and produce several folding lines 8 simultaneously on the same semifinished product, and can easily be re-equipped up to three times a day.

From the foregoing description, it is apparent that production of at least part of the frame 1 by means of folding makes it possible to produce motor vehicles of the structural type with a support frame, even in the case of extremely low production volumes, for example in the case of production volumes of as little as a hundred motor vehicles per day.

In fact, folding technology requires the use of machines which have a high level of flexibility, and makes it possible to reduce the costs caused by specific investments, compared with the known solutions, in which, on the other hand, each of the elements of the support frames is produced by means of a corresponding series of dies.

In fact, the fixed investments which are made for the frame 1 involve production or purchase of a relatively small number of dies used to shape the elements 4 and 5, and purchase of folding machines of a universal type.

Each of these folding machines can be used in order to produce elements 6 which differ greatly from one another, or it can be converted for different production sectors, if use of the folding machines is no longer necessary in order to produce the support frames.

In addition, the use of folding technology in order to produce the frame 1 makes it possible to make the production of motor vehicles of the structural type with a support frame even more flexible, compared with the known solutions.

In fact, if it is necessary to face purchasing demands which are highly variable over a period of time, for a series of motor vehicles which are different from one another, it is very quick to re-equip the folding machines according to the different elements of the frames to be produced, and thus it is relatively economical to vary the production rate of motor vehicles which are produced according to the structural type with a support frame, and are different from one another.

In addition, it is extremely quick and simple to connect the elements 6 to other elements 4, 5, 6. The fact of using profiled elements 5 makes it possible to produce longitudinal members or cross members which have a curved profile, whereas the fact of using pressed elements 4 makes it possible to produce the parts of the frame 1 which have a particularly complex profile, and those which require a higher level of work hardening.

Finally, it is apparent from the foregoing description that modifications and variations which do not depart from the field of protection of the present invention can be made to the frame 1.

In particular, the structure and shape of the frame 1 could be different from that illustrated by way of example, such as to have different characteristics of resistance, or to be designed to produce a different motor vehicle. The number of elements 4, 5, 6 of the frame 1 could be different from that indicated by way of example.

In the areas of connection which are subjected to greater loads, it is also possible to use assembly methods other than that indicated, for example arc welding with added material.

In addition, the frame 1 could be of a type other than the space frame described, and, for example, could consist of two or more separate cages which have structural characteristics which differ from one another, and each support a corresponding part of the panels 3.

## Claims

1. Support frame (1) for a motor vehicle (2); the support frame (1) being able to support at least part of the outer covering panels (3) of the motor vehicle (2) itself, and being **characterised in that** it is at least partly produced by means of folding.

2. Frame according to claim 1, **characterised in that** it comprises a plurality of structural elements (4) (5) (6) which are different, and are connected to one another, and comprising first elements (6) which are produced by means of folding.

3. Frame according to claim 2, **characterised in that** the said plurality of structural elements (4) (5) (6) comprises second elements (4) produced by means of pressing.

4. Frame according to claim 3, **characterised in that** the said plurality of structural elements (4) (5) (6) comprises third, profiled elements (5).

5. Frame according to any one of claims 2 to 4, **characterised in that** each said first element (6) comprises at least two walls (7), which are transverse relative to one another, and are connected to one another by a portion which defines a folding line (8); at least part of the said first elements (6) comprising at least one end section (14, 13) with tabs, which is connected, such as to be supported, to a corresponding adjacent structural element (4) (5) (6), and is secured to the adjacent structural element (4) (5) (6) itself.

6. Frame according to claim 5, **characterised in that** the said first elements (6) comprise at least one elongate element (10) along the said folding line (8), and having one said end section (14) comprising at least two attachment tabs (16; 17; 18; 19), each extending from a corresponding said wall (7).

7. Frame according to claim 6, **characterised in that** each said attachment tab (18; 19) is parallel to the corresponding said wall (7).

8. Frame according to claim 7, **characterised in that** each of the said attachment tabs (18; 19) is displaced from the corresponding said wall (7), in the direction at right-angles to the wall (7) itself.

9. Frame according to claim 7 or claim 8, **characterised in that** the said attachment tabs (18; 19) are separated from one another by a slot (22) which is provided along the said folding line (8).

10. Frame according to claim 5 or claim 6, **characterised in that** the said attachment tabs (16; 17; 13) are at right-angles to the said walls (7).

11. Frame according to claim 5, **characterised in that** the said first elements (6) comprise at least one panel (25).

12. Motor vehicle (2) comprising a plurality of outer covering panels (3) and a support frame (1) for at least part of the said panels (3); **characterised in that** the said support frame (1) is at least partly produced by means of folding.

13. Motor vehicle according to claim 12, **characterised in that** the said support frame (1) is produced according to any one of claims 2 to 11.
